# EUROPEAN PATENT SPECIFICATION

(11) **EP 0 816 973 B1**
(45) Date of publication and mention of the grant of the patent: **01.10.2003**
(21) Application number: 97111198.4
(22) Date of filing: 03.07.1997
(51) Int. Cl.: G06F 1/16

(54) **A notebook personal computer having a speaker cover structure**
Tragbarer Personalrechner mit Lautsprecherabdeckung
Ordinateur personnel portable ayant une structure couvercle d'haut-parleur

(30) Priority: 03.07.1996 KR 9626824
(43) Date of publication of application: 07.01.1998
(73) Proprietor: Samsung Electronics Co., Ltd., Suwon-city, Kyungki-do (KR)
(72) Inventor: Youn, Jae-Sam, Shin Miju Apt. 1411, Suwon-city, Kyungki-do (KR)
(74) Representative: Herrmann-Trentepohl, Werner, Dipl.-Ing.

(56) References cited:
- DE-A- 3 344 311
- PATENT ABSTRACTS OF JAPAN vol. 096, no. 007, 31 July 1996 & JP 08 076884 A (SANYO ELECTRIC CO LTD;TOTTORI SANYO ELECTRIC CO LTD), 22 March 1996,

## Description

### BACKGROUND OF THE INVENTION

### A. Field of the Invention

The present invention relates to a notebook personal computer (PC) having a speaker cover structure. More particularly, the present invention relates to a notebook PC having a speaker cover structure which directs a sound from a speaker, mounted on a main body of a notebook PC, toward a user.

### B. Description of the Related Art

Generally, in a conventional notebook personal computer (PC), the sound from a speaker comes from below to above since a top-housing and a speaker cover are integrated in one body.

Accordingly, the conventional notebook PC has a disadvantage in that the sound level is bad since the sound from the speaker is not directed toward the user.

Document JP 08076884 A discloses a speaker arrangement of a portable electronic equipment including a display unit. The display unit includes a pair of hinge means with rotation shafts and the speakers of the speaker arrangement are arranged at a position in the neighborhood of the rotation shafts inside the display unit.

### SUMMARY OF THE INVENTION

Accordingly, the object of the present invention is to provide a notebook personal computer (PC) having a speaker cover structure which can improve sound level by using an additional speaker cover separated from a top-housing to substantially obviate one or more of the problems due to limitations and disadvantages of the related art.

To achieve the objects and in accordance with the purpose of the invention as embodied and broadly described herein, a notebook PC is provided having a liquid crystal display for displaying a picture image, a main body for processing input/output data or a program, and at least one hinge for mechanically connecting the main body and the liquid crystal display, comprising: a top-housing for covering the main body, said top-housing being combined with the at least one hinge, and a fixing portion of the at least one hinge having a speaker hole; at least one speaker mounted in the speaker hole of the fixing portion of the at least one hinge; and a speaker cover for covering the speaker hole of the fixing portion of the at least one hinge and having an plurality of holes for directing a sound from the speaker to the outside.

Additional objects and advantages of the invention are set forth in part in the description which follows, and in part will be obvious from the description, or may be learned by practice of the invention. The objects and advantages of the invention will be realized and attained by means of the elements and combinations particularly pointed out in the appended claims.

### BRIEF DESCRIPTION OF THE DRAWINGS

The accompanying drawings, illustrate and embodiment of the invention and, together with the description, serve to explain the principles of the invention.

In the drawings:
Fig. 1 is a perspective view of a notebook PC having a speaker cover structure according to a preferred embodiment of the present invention;
Fig. 2 is a side view of a notebook PC having a speaker cover structure according to a preferred embodiment of the present invention;
Fig. 3 is a partial perspective view of a notebook PC having a speaker cover structure according to a preferred embodiment of the present invention; and
Fig. 4 is a perspective view of a speaker cover according to a preferred embodiment of the present invention.

### DESCRIPTION OF THE PREFERRED EMBODIMENT

Reference will now be made in detail to a preferred embodiment of the present invention, an example of which is illustrated in the accompanying drawings.

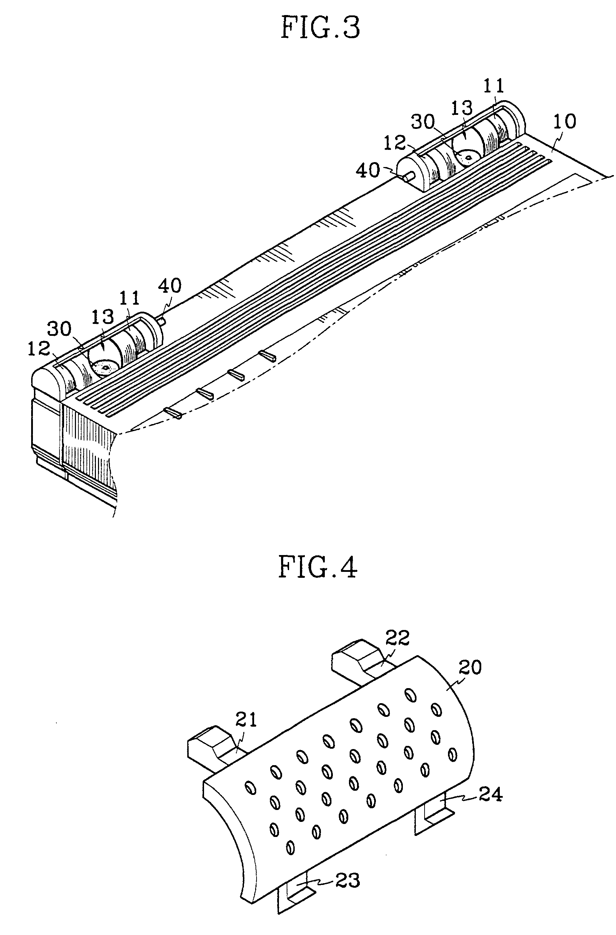

Referring to Figs. 3 and 4, a notebook personal computer (PC) having a speaker cover structure according to a preferred embodiment of the present invention, in the notebook PC having a liquid crystal display, a main body and hinges, comprises:
a speaker cover 20 formed radially and having a plurality of fixing hooks 21 to 24 in upper and lower parts thereof to be mounted on predetermined grooves; and
a top-housing 10 having speaker holes 13 formed at both portions of fixing portions of hinges 40 to direct the sound from a speaker 30, mounted inside a main body, to the outside, and speaker cover fixing grooves 11 and 12 for mounting the speaker cover 20 and formed at both portions of the speaker holes 13.

Upper fixing hooks 21 and 22 of the speaker cover 20 are supporting hooks designed to support the top-housing 10 using an elastical force, and lower fixing hooks 23 and 24 are wedge-shaped, whereby they are hooks which serve as latches to the top-housing 10.

The operation of the notebook PC having a speaker cover structure according to the preferred embodiment of the present invention is as follows.

The process for mounting the speaker cover 20 on the notebook PC is explained.

First, the speaker holes 13 are formed at both portions of the fixing portions of the hinges 40 to direct the sound from the speaker 30 to the outside.

The fixing grooves 11 and 12 for fixing the speaker cover 20 to both portions of the speaker holes 13.

The speaker cover 20 is mounted by inserting the fixing hooks 21 to 24 of the speaker cover 20 into the fixing grooves 11 and 12.

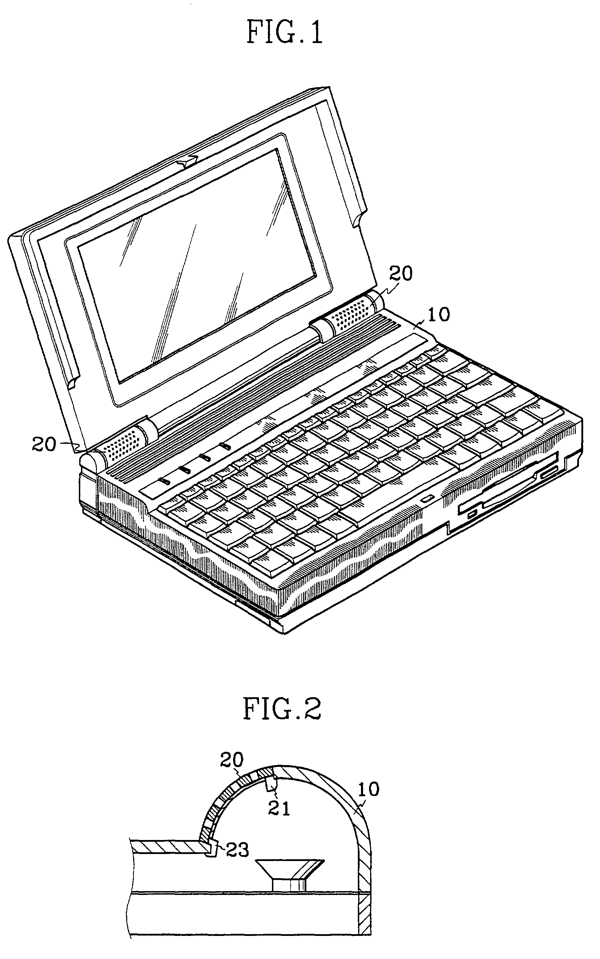

Referring to Fig. 1, the shapes of both portions of the fixing portions of the hinges 40 are formed at a slanted angle in designing the top-housing 10 and the speaker cover formed radially is mounted on the fixing hooks 21 to 24, to direct the sound from the built-in speaker 30 toward the user.

Accordingly, a sound wave may radiate at a proper angle for the user to sense since the speaker cover 20 is mounted on the top-housing 10 at a predetermined angle.

That is, referring to Fig. 2, the speaker cover 20 may be slantly mounted on the top-housing 10 at a predetermined angle since the fixing hooks 21 to 24 are jointed with the top-housing 10 through the fixing grooves 11 and 12.

Accordingly, the effect of the notebook PC having a speaker structure according to the preferred embodiment of the present invention lies in that the user can listen to the sound of the speaker clearly since the notebook PC has the additional speaker cover.

Other embodiments of the invention will be apparent to the skilled in the art from consideration of the specification and practice of the invention disclosed herein. It is intended that the specification and examples be considered as exemplary only, with the true scope of the invention being indicated by the following claims.

## Claims

1. A notebook personal computer having a liquid crystal display for displaying a picture image, a main body for processing input/output data or a program, and at least one hinge (40) for mechanically connecting the main body and the liquid crystal display, comprising:
a top-housing (10) for covering the main body, said top-housing being combined with the at least one hinge (40), and a fixing portion of the at least one hinge (40) having a speaker hole (13);
at least one speaker mounted in the speaker hole (13) of the fixing portion of the at least one hinge (40); and
a speaker cover (20) for covering the speaker hole (13) of the fixing portion of the at least one hinge (40) and having an plurality of holes for directing a sound from the speaker to the outside.

2. The notebook personal computer of claim 1, wherein upper fixing hooks (21; 22) of the speaker cover (20) are supporting hooks designed to support the top-housing (10) using an elastical force.

3. The notebook personal computer of claim 1, wherein lower fixing hooks (23; 24) are wedge-shaped, whereby they are hooks which serve as latches to the top-housing (10).

4. The notebook personal computer of claim 1, wherein the shapes of the fixing portion of the at least one hinge (40) is formed at a slanted angle in designing the top-housing and the speaker cover formed radially is mounted on the upper and lower fixing hooks (21, 22, 23, 24) to direct the sound from the built-in speaker toward the user.

## Patentansprüche

1. Notebook-Personalcomputer mit einer Flüssigkristallanzeige zum Anzeigen von Bildern, einem Hauptkörper zum Verarbeiten von Eingabe-/Ausgabedaten oder eines Programms und wenigstens einem Gelenk (40) zum mechanischen Verbinden von Hauptkörper und Flüssigkristallanzeige, umfassend:
ein oberes Gehäuse (10) zum Abdecken des Hauptkörpers, wobei das obere Gehäuse mit dem wenigstens einen Gelenk (40) kombiniert ist, und wobei ein Befestigungsabschnitt des wenigstens einen Gelenks (40) ein Lautsprecherloch (13) aufweist;
wenigstens einen Lautsprecher, der in dem Lautsprecherloch (13) des Befestigungsanschnitts des wenigstens einen Gelenks (40) montiert ist; und
eine Lautsprecherabdeckung (20) zum Abdecken des Lautsprecherlochs (13) des Befestigungsabschnitts des wenigstens einen Gelenks (40), die eine Mehrzahl Löcher aufweist, um einen Klang aus dem Lautsprecher nach außen zu führen.

2. Notebook-Personalcomputer nach Anspruch 1, bei dem obere Befestigungshaken (21; 22) der Lautsprecherabdeckung (20) Haltehaken sind, die ausgelegt sind, um das obere Gehäuse (10) unter Einsatz einer elastischen Kraft zu halten.

3. Notebook-Personalcomputer nach Anspruch 1, bei dem untere Befestigungshaken (23; 24) keilförmig sind, wodurch sie Haken sind, die als Schnappriegel am oberen Gehäuse (10) dienen.

4. Notebook-Personalcomputer nach Anspruch 1, bei dem die Formen des Befestigungsabschnitts des wenigstens einen Gelenks (40) in der Ausgestaltung des oberen Gehäuses schiefwinklig ausgebildet sind, und die radial ausgebildete Lautsprecherabdeckung an den oberen und unteren Befestigungshaken (21, 22, 23, 24) befestigt ist, um den Klang aus dem eingebauten Lautsprecher in Richtung des Benutzers zu führen.

## Revendications

1. Ordinateur personnel portable ayant un écran à cristaux liquides pour afficher une image, un corps principal pour traiter des données d'entrée/sortie ou un programme, et au moins une charnière (**40**) pour relier mécaniquement le corps principal et l'écran à cristaux liquides, comprenant :
un boîtier supérieur (**10**) pour couvrir le corps principal, ledit boîtier supérieur étant combiné à la au moins une charnière (**40**), et une partie de fixation de la au moins une charnière (**40**) ayant un orifice de haut-parleur (**13**) ;
au moins un haut-parleur monté dans l'orifice de haut-parleur (**13**) de la partie de fixation de la au moins une charnière (**40**) ; et
un couvercle de haut-parleur (**20**) pour couvrir l'orifice de haut-parleur (**13**) de la partie de fixation de la au moins une charnière (**40**) et ayant une pluralité d'orifices pour envoyer un son du haut-parleur vers l'extérieur.

2. Ordinateur personnel portable selon la revendication 1, dans lequel des crochets de fixation supérieurs (**21 ; 22**) du couvercle de haut-parleur (**20**) sont des crochets supports conçus pour porter le boîtier supérieur (**10**) à l'aide d'une force élastique.

3. Ordinateur personnel portable selon la revendication 1, dans lequel des crochets de fixation inférieurs (**23 ; 24**) sont en forme de coin, de sorte que ce sont des crochets qui servent de verrouillage pour le boîtier supérieur (**10**).

4. Ordinateur personnel portable selon la revendication 1, dans lequel la partie de fixation de la au moins une charnière (**40**) est formée avec un angle incliné lors de la conception du boîtier supérieur et le couvercle de haut-parleur, formé radialement, est monté sur les crochets de fixation supérieurs et inférieurs (**21, 22, 23, 24**) afin d'envoyer le son du haut-parleur intégré vers l'utilisateur.
